Europäisches Patentamt

(19) European Patent Office

Office européen des brevets

(11) Numéro de publication: **0 103 516**
**B1**

(12) **FASCICULE DE BREVET EUROPEEN**

(45) Date de publication du fascicule du brevet:
23.10.85

(21) Numéro de dépôt: **83401756.8**

(22) Date de dépôt: **06.09.83**

(51) Int. Cl.⁴: **D 06 F 39/08** // G01F23/14

(54) **Dispositif d'alimentation en liquide à niveau contrôlé, et application à une machine à laver.**

(30) Priorité: **14.09.82 FR 8215506**

(43) Date de publication de la demande:
**21.03.84 Bulletin 84/12**

(45) Mention de la délivrance du brevet:
**23.10.85 Bulletin 85/43**

(84) Etats contractants désignés:
**DE GB IT**

(56) Documents cités:
**FR - A - 2 394 635**

(73) Titulaire: **ESSWEIN S.A., 67, quai Paul-Doumer,
F-92400 Courbevoie (FR)**

(72) Inventeur: **Didier, Laurent, THOMSON-CSF
SCPI 173, bld. Haussmann, F-75379 Paris Cedex 08 (FR)**
Inventeur: **Delavaud, Emile, THOMSON-CSF
SCPI 173, bld. Haussmann, F-75379 Paris Cedex 08 (FR)**
Inventeur: **Briand, Loic, THOMSON-CSF SCPI 173, bld.
Haussmann, F-75379 Paris Cedex 08 (FR)**

(74) Mandataire: **Phan, Chi Quy et al, THOMSON-CSF
SCPI 173, Bld Haussmann, F-75379 Paris Cedex 08 (FR)**

BUNDESDRUCKEREI BERLIN

## Description

La présente invention concerne un dispositif d'alimentation en liquide à niveau contrôlé, et une application d'un tel dispositif à une machine à laver.

Une machine à laver telle qu'une machine à laver le linge ou la vaisselle comprend habituellement un dispositif d'alimentation en liquide ou eau à niveau contrôlé, qui remplit sa cuve jusqu'à un niveau prédéterminé, puis arrête ou interrompt automatiquement l'arrivée d'eau dans cette cuve.

Ce dispositif d'alimentation en eau à niveau contrôlé comprend souvent une électrovanne assurant un approvisionnement en eau de la cuve de la machine, une chambre de compression convertissant une variation du niveau d'eau dans la cuve en une variation de pression d'air et, dont l'extrémité enférieure est immergée dans l'eau de la cuve, un pressostat, sensible à la pression dans la chambre, commandant le fonctionnement de l'électrovanne en coopération avec un programmateur de la machine pour assurer l'ouverture et la fermeture de cette électrovanne, des canalisations d'air transmettant à ce pressostat la variation de pression d'air dans la chambre de compression, et un piège-à-gouttes constitué par un récipient pour recueillir éventuellement de l'eau échappant de la chambre de compression ou produite par condensation et l'empêcher de parvenir au pressostat, car une entrée de l'eau dans le pressostat perturbe le fonctionnement normal de ce dernier.

Dans les machines à laver connues, par exemple, la chambre de compression, les canalisations d'air et le piège-à-gouttes du dispositif d'alimentation en liquide à niveau contrôlé sont constitués par des pièces distinctes et montées dans des endroits différents de ces machines. La chambre de compression est montée sur la cuve de la machine pour avoir une extrémité immergée dans l'eau tandis que le piège-à-gouttes est monté sur le bâti fixe de celle-ci, et la canalisation d'air est montée flottante pour relier ce piège-à-gouttes à cette chambre de compression. Le fait que ce piège-à-gouttes est monté à poste fixe sur le bâti de ces machines est principalement pour éviter des secousses et des vibrations qui provoquent un échappement éventuel de l'eau dans ce piège-à-gouttes, et une arrivée de cette eau dans le pressostat, qui perturbe le fonctionnement de ce dernier.

Selon cette construction, le piège-à-gouttes est une pièce indépendante de la chambre de compression et montée dans un endroit différent de cette dernière, car la chambre de compression est habituellement fixée sur une cuve d'une machine pour avoir une de ses extrémités immergées dans l'eau de cette cuve, et cette cuve fait souvent partie d'un sous-ensemble flottant et mobile de cette machine.

Il en résulte que cette construction connue exigeant pour un dispositif d'alimentation en liquide à niveau contrôlé dans une machine à laver, une fabrication séparée de plusieurs éléments ou pièces indépendantes et un long montage de ceux-ci dans des endroits différents, s'avère onéreux et comporte une difficulté dans la protection mécanique de ces élément dispersés dans la machine.

La présente invention, permet de réaliser un dispositif d'alimentation en liquide à niveau contrôlé dans lequel un piège-à-gouttes peut être monté sur une partie d'une machine sujette aux secousses telle que la cuve d'une machine à laver, sans compremettre l'efficacité et le bon fonctionnement de ce dispositif. Elle permet en outre de réaliser un dispositif économique comportant un nombre réduit de pièces dont le montage est rapide dans un nombre réduit d'endroits et dont la protection mécanique est facile. Elle a également pour objet une application de ce dispositif à une machine à laver.

Selon l'invention, un dispositif d'alimentation en liquide à niveau contrôlé du type à pressostat, et à chambre de compression reliée à ce pressostat par des canalisations d'air et un piège-à-gouttes, est caractérisé en ce qu'il comprend un piège-à-gouttes monté dans un endroit soumis aux vibrations ou secousses, et pourvu de moyen gênant le transfert du liquide de son enceinte vers ce pressostat.

Pour mieux faire comprendre l'invention on décrit ci-après une fabrication connue et un exemple de réalisation de l'invention illustrés par des dessins ci-annexés dont;

— la figure 1 représente une vue schématique d'une machine à laver le linge dans laquelle est monté un dispositif connu d'alimentation en liquide à niveau contrôlé, ses divers éléments étant illustrés à des échelles différentes;

— la figure 2 représente une vue schématique d'une machine à laver le linge dans laquelle est monté un dispositif d'alimentation en liquide à niveau contrôlé, réalisé selon l'invention, les divers éléments étant illustrés à des échelles différentes, et

— la figure 3 représente, à une autre échelle, une vue d'une partie du dispositif d'alimentation en liquide de la figure 2.

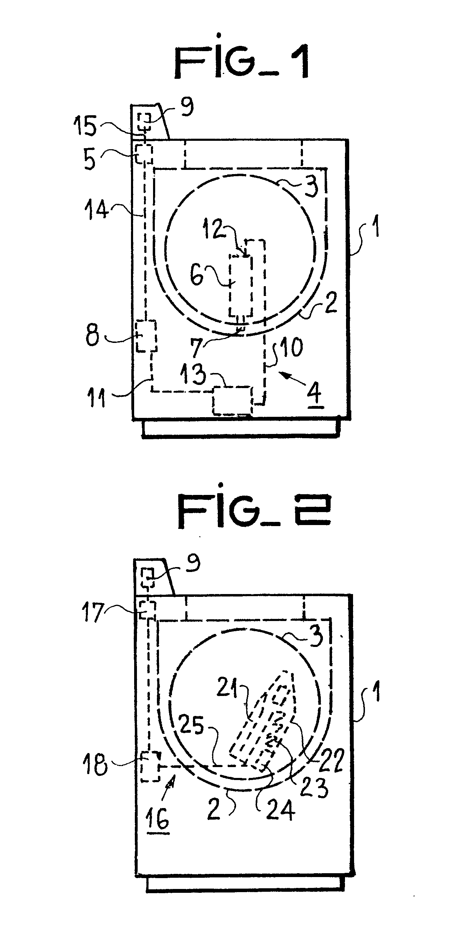

Une machine à laver le linge connue 1 comprend habituellement une cuve 2, un tambour à linge 3 et un dispositif connu d'alimentation en liquide ou eau à niveau contrôlé 4 (figure 1). Ce dispositif connu d'alimentation en liquide 4 comprend une électrovanne 5 assurant un approvisionnement en eau de la cuve 2, une chambre de compression 6 dont une extrémité 7 est immergée dans l'eau de la cuve 2, assurant un convertissement de la variation de niveau-d'eau admise dans la cuve 2, en une variation de pression d'air, un pressostat 8 assurant la commande de l'électrovanne 5, en coopération avec un programmateur 9 de la machine pour ouvrir et fermer celle-ci, des canalisation d'air 10 et 11 assurant une transmission de la variation de pression d'air de la chambre de compression 6 au pressostat 8, et un piège-à-gouttes 13, disposé entre la canalisation d'air 10 reliée à la partie supérieure 12 de la chambre de compression 6 et la canalisation 11 reliée au pressostat 8, pour recueillir de l'eau éventuellement échappée de cette chambre de compression 6.

La chambre de compression 6 est constituée par un récipient allongé contenant de l'air. Quand la cuve 2 est alimentée en eau, l'eau entre également dans cette chambre de compression 6 par l'extrémité 7 de cette dernière. Le niveau d'eau monte en même temps dans la cuve 2 et dans la chambre de compression 6. L'air emprisonné dans la chambre 6 est comprimé. Une variation du niveau d'eau est ainsi converti en une variation de pression d'air, et la pression exercée par l'air est transmise au pressostat 8 par les canalisation d'air 10 et 11 à travers le piège-à-gouttes 13. Quand l'eau atteint le niveau prédéterminé de remplissage dans la cuve 2, la pression exercée par l'air comprimé dans la chambre 6 atteint également la valeur qui déclenche dans le pressostat 8 la commande de fermeture de l'électrovanne 5, cette fermeture étant faite d'une manière connue en coopération avec le programmateur 9.

La chambre de compression 6 est montée sur la cuve 2 qui fait partie d'un sous-ensemble flottant et mobile de la machine 1 tandis que le piège-à-gouttes et le pressostat 8 sont montés sur le bâti fixe de la machine 1. La canalisation d'air 10 qui relie la chambre de compression 6 au piège-à-gouttes 13 est maintenue flottante pour lui permettre de suivre facilement le mouvement de la cuve 2. La raison principale du montage à poste fixe du piège-à-gouttes a déjà été indiquée dans un paragraphe précédent. Dans ce dispositif, la chambre de compression 6, les canalisations 10 et 11 et le piège-à-gouttes 13 sont des pièces distinctes qui sont fabriquées séparément et montées dans des endroits différents de la machine 1. Les inconvénients de ce mode de construction sont déjà rappelés cidessus.

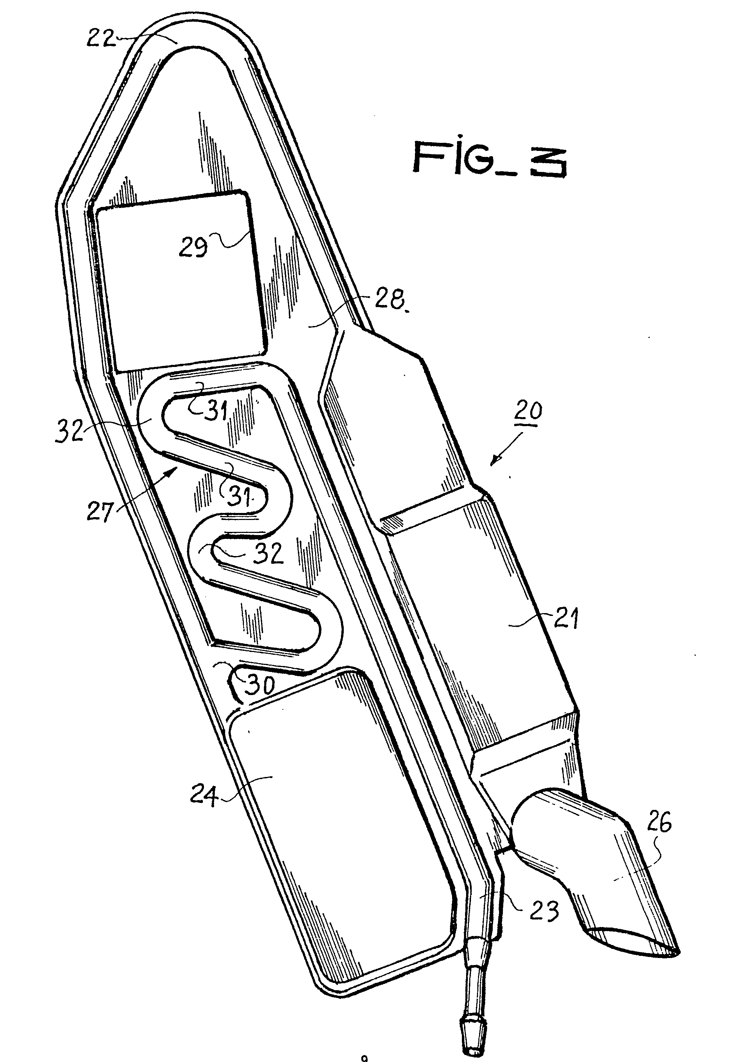

Selon un exemple de réalisation de l'invention illustré dans la figure 2, dans une machine à laver le linge 1 analogue à celle de la figure 1, munie d'une cuve 2, d'un tambour à linge 3, d'un programmateur 9, le dispositif d'alimentation en liquide ou eau à niveau contrôlé 16 comprend d'une part une électrovanne 17, un pressostat 18 monté sur le bâti fixe de la machine 1, et d'autre part une chambre de compression 21, un piège-à-gouttes 24, une canalisation d'air 22 reliant la chambre de compression 21 au piège-à-gouttes 24, une canalisation d'air 23 participant à la mise de ce piège-à-gouttes en communication avec le pressostat 18, comprenant une extremité qui, destinée à être reliée à ce piège-à-gouttes, porte un tronçon 27 maintenu au dessus du niveau de ce piège-à-gouttes et accusant un changement alternatif de direction dans son tracé montant, et une canalisation d'air 25 prolongeant la canalisation 23 pour relier le piège-à-gouttes 24 au pressostat 18, ces éléments 21, 22, 23, 24, 25 étant montés sur la cuve 2 de la machine 1.

Un changement alternatif de direction de la canalisation d'air 23 dans son tronçon montant 27 permet à celle-ci de gêner efficacement la progression de l'eau sortant éventuellement du piège-à-gouttes 24 consécutivement aux secousses dont ce dernier subit les effets, et une position haute du tronçon montant 27 de la canalisation d'air rapport à une position basse de ce piège-à-gouttes 24, favorise un retour rapide dans ce dernier, de l'eau échappée, freinée dans le tronçon 27.

Il en résulte que contrairement au mode de construction connu, le piège-à-gouttes 24 du dispositif d'alimentation en liquide à niveau contrôlé, est monté dans un endroit soumis aux secousses et vibrations telle que la cuve 2 de la machine à laver 1 sans compromettre l'efficacité et le bon fonctionnement du pressostat 18.

Dans le dispositif d'alimentation en liquide à niveau contrôlé, la chambre de compression 21, le piège-à-gouttes 24, la canalisation d'air 22 reliant le piège-à-goutte à cette chambre de compression et la canalisation d'air 23 munie de son tronçon 27 participant à la mise du piège-à-gouttes 24 en communication avec le pressostat 18 peuvent être regroupés et former une seule pièce monobloc 20 (figure 3). La pièce 20 peut alors être fixée sur la cuve 2 de la machine 1 avec une extrémité 26 de la chambre de compression 21, immergée dans de la cuve 2 et une canalisation d'air 25 prolongeant la canalisation d'air 23 pour la relier au pressostat 18. La pièce 20 est réalisée en matière synthétique suivant une technique connue telle que celle d'injection ou de formage et de soudage, ou de soufflage.

Il en résulte que le nombre des éléments constituant le dispositif d'alimentation en liquide à niveau contrôlé 16 réalisé selon l'invention est réduit à quatre à savoir une électrovanne 17, un pressostat 18, une pièce 20 et un canalisation d'air 25, tandis que celui des dispositifs connus s'élèvent à savoir, une électrovanne 5, un pressostat 8, une chambre de compression 6, deux canalisation d'air 10 et 11, et un piège-à-gouttes 13.

Dans la pièce 20, le tronçon 27 de la canalisation d'air 23 présente dans un changement alternatif de direction dans son tracé, des parties rectilignes 31 et des arrondis 32 formant successivement des angles saillants et rentrants à sommets arrondis. Ce tronçon 27 de la canalisation d'air 23 comprend, par rapport aux autres éléments de la pièce 20, une disposition qui permet, aux bissectrices des angles saillants et rentrants à sommets arrondis formés dans son tracé d'être sensiblement parallèles à l'horizontale, et aux côtés de ces angles, formés par des parties rectilignes 31 de la canalisation 23 d'avoir une position inclinée par rapport à l'horizontale et de former des pentes successives descendantes vers le piège-à-gouttes 24, lors d'une fixation de cette pièce 20 sur la cuve 2 de la machine 1. Selon cette disposition, l'eau s'échappant du piège-à-gouttes 24 et errant dans le tronçon 27 est constamment invitée à suivre ces pentes descendantes et à retourner dans le piège-à-gouttes.

Dans la pièce 20 la chambre de compression 21, les canalisation d'air 22, 23 et le piège-à-gouttes 24 sont maintenus dans leurs positions respectives par une membrane 28. Une ouverture 29 est formée dans la membrane 28 pour faciliter la fixation de la pièce 20.

Dans l'exemple illustré, le tronçon 27 de la canalisation d'air 23 est relié à la canalisation d'air 22, en un point 30, situé en amont du piège-à-gouttes 24.

Selon l'invention le tronçon 27 de la canalisation d'air 23 peut être relié directement au piège-à-gouttes 24 en un point qui se trouve de préférence dans la partie supérieure de ce dernier.

## Revendications

1. Dispositif d'alimentation en liquide à niveau contrôlé, du type à pressostat (18), et à chambre de compression (21) reliée à ce pressostat par des canalisations d'air (22, 23, 25) et un piège-à-gouttes (24), caractérisé en ce qu'il comrend un piège-à-gouttes monté dans un endroit soumis aux vibrations ou secousses, et pourvu de moyen (27) gênant le transfert du liquide de son enceinte vers ce pressostat (18).

2. Dispositif selon la revendication 1, caractérisé en ce le moyen gênant le transfert du liquide du piège-à-gouttes (24) vers le pressostat (18) comprend, dans la canalisation d'air (23) participant à la mise du piège-à-gouttes (24) en communication avec le pressostat (18), une extrémité qui, destinée à être reliée à ce piège-à-gouttes, porte un tronçon montant (27) maintenu au-dessus du niveau de ce piège-à-gouttes et accusant un changement alternatif de direction dans son tracé montant.

3. Dispositif selon la revendication 1, caractérisé en ce qu'il comprend dans le tronçon (27) de la canalisation d'air (23) accusant un changement alternatif de direction dans son tracé montant des parties rectilignes (31) et des arrondies (32) formant successivement des angles saillants et rentrants à sommets arrondis.

4. Dispositif selon l'une des revendications 1 et 2, caractérisé en ce qu'il comprend une pièce monobloc (20), constituée d'une chambre de compression (21), d'un piège-à-gouttes (24), d'une première canalisation d'air (22) reliant la partie supérieure de cette chambre de compression à ce piège-à-gouttes, et d'une deuxième canalisation d'air (23) participant à la mise de ce piège-à-gouttes (24) en communication avec le pressostat (18).

5. Dispositif selon la revendication 3, caractérisé en ce que le tronçon (27) de la canalisation d'air (23) comprend dans la pièce monobloc (20) une disposition qui permet aux bissectrices des angles saillants et rentrants à sommets arrondis dans son tracé, d'être sensiblement parallèles à l'horizontale, et aux côtés rectilignes (31) de ces angles d'avoir une position inclinée par rapport à l'horizontale et de former des pentes successives descendant vers le piège-à-gouttes (24), lors de la mise en place de cette pièce monobloc (20).

6. Dispositif selon l'une des revendication 1 à 4, caractérisé en ce que le tronçon (27) de la canalisation d'air (23) qui présente un changement alternatif de direction dans son tracé, est branché sur la canalisation d'air (22) qui relie le piège-à-gouttes (24) à la partie supérieure de la chambre de compression (21), en un point (30) en amont de ce piège-à-gouttes.

7. Dispositif selon l'une des revendications 3 à 5, caractérisé en ce que la pièce monobloc (20) est réalisée en matière synthétique.

8. Dispositif selon la revendication 7, caractérisé en ce que la pièce monobloc (20) en matière plastique est réalisée suivant la technique de soufflage.

9. Application d'un dispositif selon l'un des revendications 1 à 6 à une machine à laver, caractérisée en ce que sur la cuve de cette machine sont montés la chambre de compression (21), le piège-à-gouttes (24), et la canalisation d'air (23) munie de son tronçon (27) présentant un changement alternatif de direction dans son tracé.

## Patentansprüche

1. Flüssigkeitseinspeisungsvorrichtung mit Niveauregelung mit einem Druckschalter (18), einer mit diesem Druckschalter durch Luftleitungen (22, 23, 25) verbundenen Druckkammer (21) und einer Tropfenfalle (24), dadurch gekennzeichnet, daß sie eine Tropfenfalle aufweist, die in einem Schwingungen oder Stößen unterworfenen Bereich montiert und mit einer Vorrichtung (27) versehen ist, die den Übertritt von Flüssigkeit aus ihrem Raum zum Druckschalter (18) hemmt.

2. Vorrichtung nach Anspruch 1, dadurch gekennzeichnet, daß die den Übertritt von Flüssigkeit von der Tropfenfalle (24) zum Druckschalter (18) hemmende Vorrichtung in der Luftleitung (23), die an der Verbindung der Tropfenfalle (24) mit dem Druckschalter (18) teilhat, ein Ende aufweist, das zur Verbindung mit dieser Tropfenfalle bestimmt ist und einen aufsteigenden Abschnitt (27) trägt, der oberhalb des Niveaus dieser Tropfenfalle gehalten ist und in seinem aufsteigenden Verlauf einen hin- und hergehenden Richtungswechsel aufweist.

3. Vorrichtung nach Anspruch 1, dadurch gekennzeichnet, daß sie in dem mit hin- und hergehendem Richtungswechsel in seinem aufsteigenden Verlauf ausgebildeten Abschnitt (27) der Luftleitung (23) gerade Teile (31) und gerundete Teile (32) aufweist, die aufeinanderfolgend vorund zurückspringende Winkel mit abgerundeten Spitzen bilden.

4. Vorrichtung nach einem der Ansprüche 1 und 2, dadurch gekennzeichnet, daß sie einen einstückigen Block (20) aufweist, der aus einer Druckkammer (21), einer Tropfenfalle (24), einer ersten Luftleitung (22), die den oberen Teil dieser Druckkammer mit dieser Tropfenfalle verbindet, und einer zweiten Luftleitung (23), die an der Verbindung dieser Tropfenfalle (24) mit dem Druckschalter (18) teilhat, besteht.

5. Vorrichtung nach Anspruch 3, dadurch gekennzeichnet, daß der Abschnitt (27) der Luftleitung (23) im einstückigen Block (20) eine Anordnung derart aufweist, daß die Winkelhalbierenden der in seinem Verlauf vor- und zurückspringenden Winkel mit abgerundeten Spitzen im wesentlichen parallel zur Waagerechten verlaufen und die geraden Schenkel (31) dieser Winkel eine bezüglich der Waagerechten geneigte Stellung haben und aufeinanderfolgende, zur Tropfenfalle (24) absteigende Gefällstrecken bilden, wenn dieser einstückige Block (20) an seinem Platz angeordnet ist.

6. Vorrichtung nach einem der Ansprüche 1 bis 4, dadurch gekennzeichnet, daß der in seinem Verlauf einen hin- und hergehenden Richtungswechsel aufweisende Abschnitt (27) der Luftleitung (23) von der die Tropfenfalle (24) mit dem oberen Teil der Druckkammer (21) verbindenden Luftleitung (22) an einem stromaufwärts von dieser Tropfenfalle liegenden Punkt (30) abzweigt.

7. Vorrichtung nach einem der Ansprüche 3 bis 5, dadurch gekennzeichnet, daß der einstückige Block (20) aus einem Kunststoff hergestellt ist.

8. Vorrichtung nach Anspruch 7, dadurch gekennzeichnet, daß der einstückige Block (20) aus Kunststoff nach einem Blasformverfahren hergestellt ist.

9. Anwendung einer Vorrichtung nach einem der Ansprüche 1 bis 6 bei einer Waschmaschine, dadurch gekennzeichnet, daß die Druckkammer (21), die Tropfenfalle (24) und die Luftleitung (23) mit ihrem Abschnitt (27), der in seinem Verlauf einen hin- und hergehenden Richtungswechsel aufweist, am Bottich dieser Maschine montiert sind.

## Claims

1. A liquid feed device with level control, comprising a manometric switch (18), a compression chamber (21) communicating with said manometric switch through air ducts (22, 23, 25), and a droplet trap (24), characterised in that it includes a droplet trap which is mounted in a region subjected to vibrations or shocks and is provided with means (27) for inhibiting liquid transfer from its chamber to the manometric switch (18).

2. A device as claimed in claim 1, characterised in that the means for inhibiting the transfer of liquid from the droplet trap (24) to the manometric switch (18) includes an end in the air duct (23) participating in the communication between the droplet trap (24) and the manometric switch (18), said end being intended for connection to said droplet trap and having an ascending section (27) held above the level of said droplet trap and exhibiting an alternating change of direction in its ascending extension.

3. A device as claimed in claim 1, characterised in that in the section (27) of the air duct (23) provided with the alternating change of direction in its ascending extension, the device comprises rectilinear portions (31) and rounded portions (32) which successively form salient and re-entering angles having rounded-off apices.

4. A device as claimed in any of the claims 1 and 2, in that it comprises an integral block (20) constituted of a compression chamber (21), a droplet trap (24), a first air duct (22) communicating the upper portion of said compression chamber to said droplet trap, and a second air duct (23) participating in the communication between said droplet trap (24) and said compression switch (18).

5. A device as claimed in claim 3, characterised in that the section (27) of the air duct (23) in the integral block (20) comprises such an arrangement that the bisecting lines of the salient and re-entering angles with rounded-off apices along the extension of said section are substantially parallel to the horizontal, and the rectilinear legs (31) of said angles are inclined relative to the horizontal and form successive down grades descending towards the droplet trap (24) when said integral block (20) is mounted in place.

6. A device as claimed in any of the claims 1 to 4, characterised in that the section (27) of the air duct (23) which exhibits an alternating change of direction along its extension branches from the air duct (22) which communicates the droplet trap (24) with the upper portion of the compression chamber (21) at a location (30) upstream of said droplet trap.

7. A device as claimed in any of the claims 3 to 5, characterised in that the integral block (20) is made of a synthetic plastics material.

8. A device as claimed in claim 7, characterised in that the integral block (20) is made of synthetic plastics by a blow forming technique.

9. Use of a device as claimed in any of the claims 1 to 6 in a washing machine, characterised in that the compression chamber (21), the droplet trap (24) and the air duct (23) with its section (27) exhibiting an alternating change of direction along its extension are mounted on the vat of said machine.

# FIG_1

# FIG_2

FIG_3